# EUROPÄISCHE PATENTANMELDUNG

(11) **EP 3 278 886 A1**
(43) Veröffentlichungstag der Anmeldung: **07.02.2018**
(21) Anmeldenummer: 17183359.3
(22) Anmeldetag: 26.07.2017
(51) Int. Cl.: B09B 3/00, B09B 5/00, B26D 5/22, B26D 7/00, B26D 7/01, B65B 43/00, B65G 17/30, B65D 85/804, B29B 17/02

(54) **VORRICHTUNG UND VERFAHREN ZUM RECYCELN VON MIT PULVRIGEM INHALT GEFÜLLTEN UND GESCHLOSSENEN BEHÄLTERN**

(30) Priorität: 01.08.2016 DE 102016114194
(71) Anmelder: HM Anlagentechnik GmbH, 28816 Stuhr-Brinkum (DE)
(72) Erfinder: Wilkens, Thorben, 27801 Brettorf (DE)
(74) Vertreter: Siekmann, Gunnar

(57) **Zusammenfassung**

Bei einer Vorrichtung zum Recyceln von mit pulvrigem Inhalt gefüllten und geschlossenen Behältern, insbesondere von gefüllten Kaffeekapseln (3), umfassend eine Zwangsführung (2) für die Behälter ist vorgesehen, dass zumindest eine mit den Behälterwandungen in schneidende Wirkverbindung bringbare Schneideinrichtung (4) vorgesehen ist.

## Beschreibung

Die Erfindung betrifft eine Vorrichtung zum Recyceln von mit pulvrigem Inhalt gefüllten und geschlossenen Behältern, insbesondere von gefüllten Kaffeekapseln, umfassend eine Zwangsführung für die Behälter mit zumindest einer mit den Behälterwandungen in schneidende Wirkverbindung bringbaren Schneideinrichtung, wobei die Schneideinrichtung ortsfest angeordnet ist und die Zwangsführung für die Behälter ein Annährungsorgan für die Behälter an die Schneideinrichtung aufweist.

Behälter mit pulvrigem Inhalt werden zu verschiedenen Zwecken eingesetzt. Regelmäßig sind diese Behälter auch geschlossen, um ein Austreten des pulvrigen Inhalts zu vermeiden. Derartige Behälter sind beispielsweise Behälter für Waschmittel, körnige Lebensmittel oder auch für Kaffee. Gerade Behälter mit Kaffee, sogenannte Kaffeekapseln, werden in großen Stückzahlen hergestellt.

Ist ein derartiger mit dem pulvrigen Inhalt gefüllter Behälter nicht für den Verbrauch durch Konsumenten geeignet, beispielsweise weil eine Unterfüllung oder eine Überfüllung des Behälters vorliegt, so ist bei bestimmten Behältern bisher dieser Behälter jeweils als Ausschuss aussortiert worden. Gerade bei Kaffeekapseln tritt durchaus eine Unterfüllung oder Überfüllung mit Kaffee auf, die 1 % bis 3 % der hergestellten Menge ausmachen kann.

Da diese Behälter geschlossen sind, können sie nicht einfach ausgeschüttet werden. Bisher werden daher derartige Behälter mit dem Inhalt entsorgt.

Aus der WO 2016/132389 A1 ist eine Vorrichtung zum Aufschneiden von Kapseln bekannt, bei der die Kapseln oder Behälter zwangsweise einem Annäherungsorgan zugeführt werden, wobei das Annäherungsorgan als eine Art Schieber ausgebildet ist, mit dem die Kapseln gegen eine Schneideinrichtung gedrückt werden. Mit dem Schieber wird dabei jeweils immer nur eine Kapsel oder ein Behälter vereinzelt der Schneideinrichtung zugeführt. Die US 2062353 A zeigt eine Vorrichtung, bei der Behälter in einem freistehenden Zellenrad aufgenommen und weitergefördert werden.

Der Erfindung liegt die Aufgabe zugrunde, eine Vorrichtung der eingangs genannten Gattung aufzuzeigen, mit der ein Ressourcen schonendes und den Inhalt wiederverwendendes Recyceln der Behälter ermöglicht ist.

Diese Aufgabe ist erfindungsgemäß dadurch gelöst, dass das Annährungsorgan als Zellenrad ausgebildet ist und oberhalb einer Auflagefläche für die Behälter angeordnet ist, wobei das Zellenrad zumindest abschnittsweise von einem Rahmenbauteil eingefasst ist, und dass die Schneideinrichtung eine Klinge ist, die am Rahmenbauteil befestigt ist. Bei der erfindungsgemäßen Vorrichtung ist ein Öffnen der geschlossenen Behälter möglich. Die Vorrichtung sieht dazu die Schneideinrichtung vor, mit der Behälterwandungen in schneidende Wirkverbindung gebracht werden können.

Behälterwandungen von Behältern für diverse pulvrige Inhalte weisen eine ausreichende mechanische Stabilität auf, so dass eine Schneideinrichtung mit diesen Behälterwandungen in der Weise in schneidende Wirkverbindung treten kann, dass keine Schneidreste bzw. Schneidpartikel entstehen. Mit der erfindungsgemäßen Vorrichtung ist es somit möglich, die Behälter sauber aufzuschneiden und den pulvrigen Inhalt aus den Behältern herauszunehmen. Dabei ist eine saubere Trennung von Inhalt und Behälterbestandteilen notwendig.

Die aus den Behältern herausgenommenen pulvrigen Inhalte können in den Produktionsprozess zurückgeführt werden. Dadurch gelingt eine Produkteinsparung. Die von den pulvrigen Inhalten getrennten Behälterbestandteile können sauber recycelt werden.

Die Schneideinrichtung ist dabei ortsfest angeordnet und die Zwangsführung für die Behälter weist das Annährungsorgan für die Behälter an die Schneideinrichtung auf. Mit der Zwangsführung der Behälter können diese geführt und bewegt werden. Dadurch ist eine Bewegung zu einer Schneideinrichtung ermöglicht und auch ein Beeinflussen der Behälter mit der Schneideinrichtung ermöglicht. Das Annährungsorgan führt die Behälter an die Schneideinrichtung heran und ist darüber hinaus auch in der Lage, die Behälter über die Schneideinrichtung hinweg zuführen, so dass mit der Schneideinrichtung tatsächlich eine Zerschneidung des Behälters in zwei Behälterhälften auftritt. Diese Behälterhälften geben große Bereiche für den Austritt des pulvrigen Inhaltes frei, so dass der Inhalt vorzugsweise vollständig aus den Behälterresten austreten kann.

Das Annährungsorgan hat vorzugsweise jeweils einen Behälter aufnehmende Taschen. Mit diesen Taschen erfolgt eine Vereinzelung der Behälter. Jeder Behälter wird somit einzeln an die Schneideinrichtung herangeführt, so dass es keine gegenseitige Beeinflussung von Behältern gibt. Vorteilhaftes Ergebnis ist das jeweilige Einbringen eines sauberen Schnittes in jeden Behälter. Das Annährungsorgan ist als Zellenrad ausgebildet und mit definiertem Abstand oberhalb einer Auflagefläche für die Behälter angeordnet. Zellen und Auflagefläche wirken hier in der Weise zusammen, dass die Behälter auf der Auflagefläche aufliegen und mit den Zellen lediglich in der Ebene dieser Auflagefläche geführt werden. Die Zellen sind dazu vorzugsweise zumindest abschnittsweise von einem Rahmenbauteil eingefasst, so dass sich eine Zwangsführung für die Behälter ergibt. Diese Zwangsführung führt die Behälter zur Schneideinrichtung, da die Schneideinrichtung eine Klinge umfasst, die am Rahmenbauteil befestigt ist. Die Behälter werden also voneinander vereinzelt, in Taschen aufgenommen und mit diesen Taschen an die Klinge herangeführt sowie über die Klinge hinweg geführt, da die Zellen sich in einer fortlaufenden Drehbewegung befinden, um die Führung der Behälter zu ermöglichen.

Zur konstruktiven Ausbildung der Zellen kann nach einer Weiterbildung der Erfindung vorgesehen sein, dass dieses entlang der Drehrichtung gerichtete Zellen aufweist, wobei jeweils zwischen zwei einander benachbarten Zähnen eine Zelle als Tasche für einen Behälter ausgebildet ist. Die gerichteten Zellen schaffen einen größeren Öffnungswinkel der Zelle am Außendurchmesser, so dass ein sicheres Einführen eines Behälters in diese somit ausgebildete Tasche ermöglicht ist.

Die Zellen haben vorzugsweise jeweils eine konische Form. Diese dient als "Negativ" des Behälters und ermöglicht eine gleichmäßige Anlagefläche während des Führens der Behälter. Weiterhin wird so ein gerader Schnitt erreicht, ohne dass der Behälter kippt.

Eine nächste Weiterbildung der Erfindung sieht noch vor, dass die Zähne jeweils eine parallel zur Auflagefläche für die Behälter ausgerichtete Schlitzung aufweisen. Diese Schlitzung ermöglicht die Anordnung der Klinge der Schneideinrichtung in einem Abstand zur Auflagefläche. Die Zellen des Zellenrades können aufgrund der Schlitzung abschnittsweise unterhalb und abschnittsweise oberhalb der Klinge bewegt werden, ein zwischen zwei benachbarte Zellen des Zellenrades aufgenommener Behälter wird aber aufgrund seiner gegebenen Bauhöhe gegen die Klinge geführt. Die Klinge schneidet den Behälter in zwei Teile.

Separater Schutz wird beansprucht für ein Verfahren zum Recyceln von mit pulvrigem Inhalt gefüllten und geschlossenen Behältern, insbesondere von Kaffeekapseln, insbesondere unter Einsatz einer vorbeschriebenen Vorrichtung, wobei zunächst die Behälter gleich ausgerichtet und jeweils voneinander vereinzelt werden, die Behälterwandungen mit einer Schneideinrichtung in schneidende Wirkverbindung gebracht werden und anschließend der Inhalt der Behälter von den Behälterresten getrennt wird.

Das erfindungsgemäße Verfahren betrifft natürlich das Schneiden der Behälterwandungen zum Öffnen der Behälter. Zuvor sind die Behälter aber gleich auszurichten, nämlich in ihrer Lage gleich auszurichten. Bei Kaffeekapseln ist es beispielweise möglich, diese Kapseln auf eine mit z. B. Alufolie verschlossener Oberseite zu stellen. Bei der Erfindung soll sichergestellt werden, dass Behälterwandungen geschnitten werden, nicht aber Folienabschnitte. Dies deshalb, um zu verhindern, dass Folienpartikel in die aus den Behältern herausgeholten Inhalte gelangt.

Bevorzugt werden die Behälter dabei mit einem Zellenrad vereinzelt. Jeder Behälter wird dann in einer Tasche des Zellenrades aufgenommen und separat der Schneideinrichtung zugeführt. Dabei liegen die Behälter vorteilhafterweise auf einer Auflagefläche auf und werden auf dieser weitergefördert.

Nach Passieren der Schneideinrichtung fallen aus den Behältern herausgeholte Inhalte und Behälterreste zunächst in den gleichen Bereich, im Nachgang ist aber eine Trennung der Behälterreste von dem Inhalt möglich. So ist gewährleistet, dass die Behälterreste separat recycelt werden können und der aus den Behältern herausgeholte Inhalt in den Produktionsprozess zurückgegeben wird.

Ein Ausführungsbeispiel der erfindungsgemäßen Vorrichtung ist in der Zeichnung gezeigt. Es zeigen:
- Figur 1:: eine perspektivische Ansicht einer erfindungsgemäßen Vorrichtung zum Recyceln von mit Kaffee gefüllten Kaffeekapseln;
- Figur 2:: eine maßstäblich vergrößerte perspektivische Ansicht einer Einzelheit der Vorrichtung gemäß Figur 1; und
- Figur 3:: eine weitere perspektivische Ansicht einer Einzelheit der Vorrichtung gemäß Figur 1.

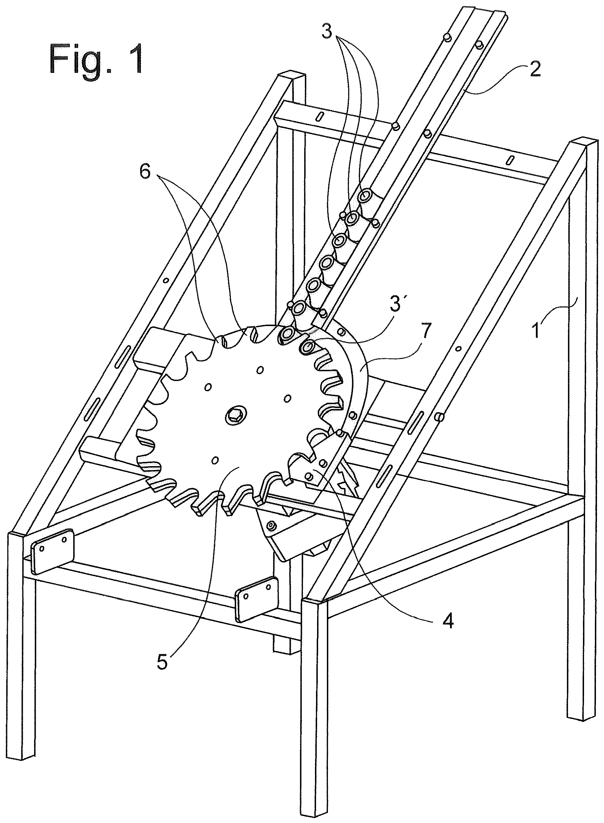

Die Vorrichtung in Figur 1 weist ein Maschinengestell 1 auf. Dieses Maschinengestell 1 trägt eine Schiene 2 als Zwangsführung für Kaffeekapseln 3. Die Kaffeekapseln 3 sind mit Kaffee gefüllt, für einen Verkauf jedoch nicht geeignet.

An dem Maschinengestell 1 ist eine Klinge 4 befestigt. Mit der erfindungsgemäßen Vorrichtung können die Kaffeekapseln 3 an dieser Klinge 4 angenähert werden. Dazu ist ein Zellenrad 5 als Annährungsorgan vorgesehen. Dieses Zellenrad 5 hat zwischen einander benachbarten Zähnen 6 Taschen, in die jeweils eine Kaffeekapsel 3' eingeführt werden kann. Die Kaffeekapseln 3 rutschen aufgrund ihrer eigenen Schwerkraft in Richtung des Zellenrades 5 und werden von den Zähnen 6 des Zellenrades 5 in den Kaffeekapseln 3' vereinzelnderweise mitgenommen. Dem Zellenrad 5 ist dabei ein Rahmenbauteil 7 zugeordnet, das ein gegebenenfalls auftretendes Herausfallen der Kaffeekapseln 3' aus dem Zellenrad 5 verhindert. Mit dem Zellenrad 5 werden die Kaffeekapseln 3' über die Klinge 4 hinweg geführt, wobei die Klinge 4 eine vollständige Zerschneidung jeder Kaffeekapsel 3' bewirkt. Kaffeekapseln 3' und Kaffee können dann getrennt voneinander entsorgt werden.

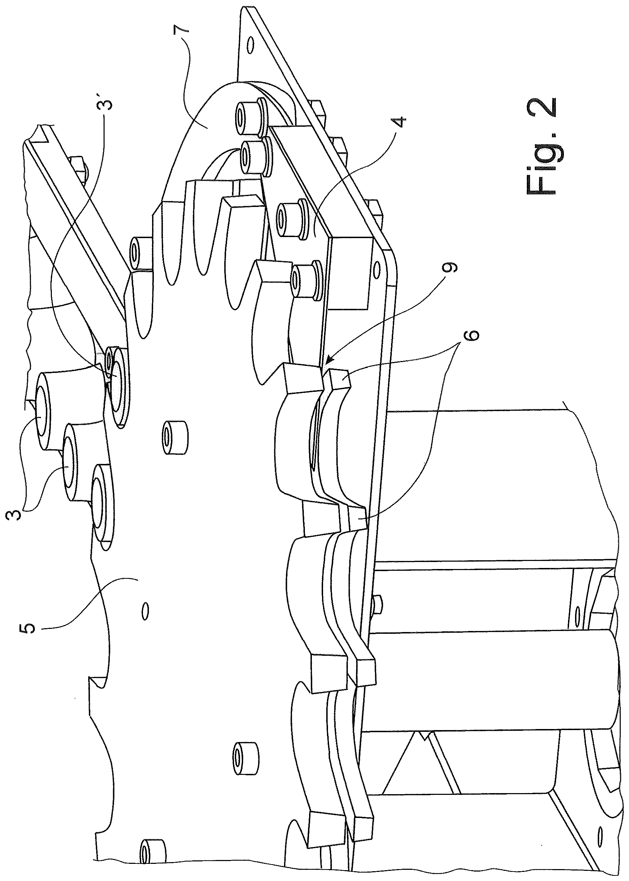

Figur 2 zeigt, dass die Zähne 6 des Zellenrades 5 jeweils eine Schlitzung 9 aufweisen. Aufgrund dieser Schlitzung 9 können die Zähne 6 vollständig über die Klinge 4 geführt werden. Die Kaffeekapseln 3, 3' werden dagegen auf etwa halber Höhe durch die Klinge 4 in zwei Hälften geteilt.

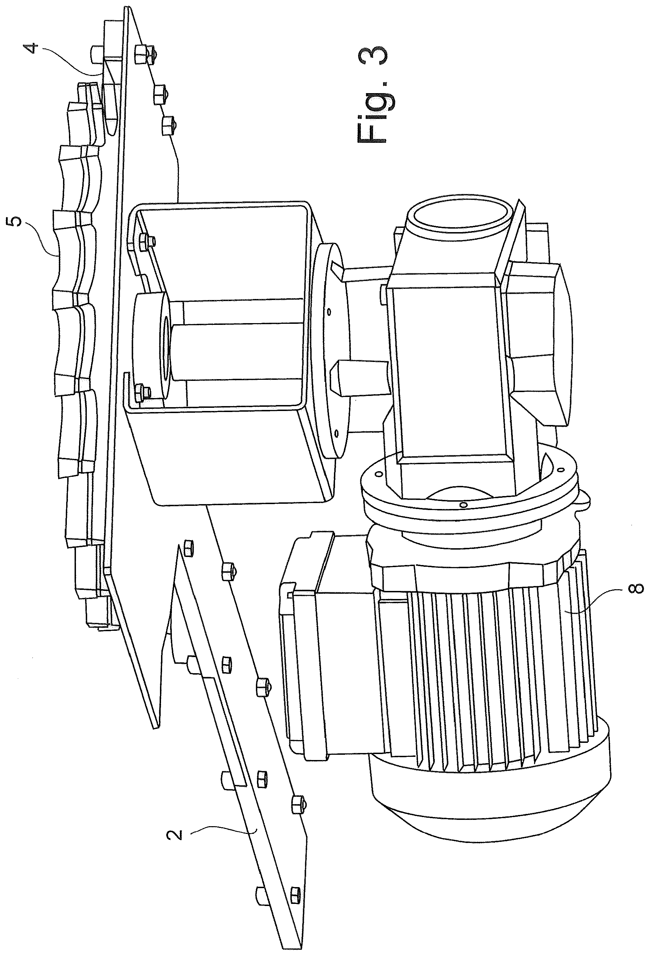

Figur 3 zeigt noch einen Elektromotor 8 als Antrieb für das Zellenrad 5. Bei diesem Elektromotor 8 kann es sich um einen Getriebemotor handeln, der das Zellenrad 5 in eine langsame Drehung von beispielswiese 25 Umdrehungen pro Minute bringt. Dadurch kann sich ein Durchsatz von etwa 500 Kaffeekapseln 3, 3' pro Minute ergeben. Eine sichere Zuführung der Kaffeekapseln 3' wird durch einen Neigungswinkel von etwa 40° der Schiene 2 erreicht.

## Patentansprüche

1. Vorrichtung zum Recyceln von mit pulvrigem Inhalt gefüllten und geschlossenen Behältern, insbesondere von gefüllten Kaffeekapseln, umfassend eine Zwangsführung für die Behälter, mit zumindest einer mit den Behälterwandungen in schneidende Wirkverbindung bringbaren Schneideinrichtung, wobei die Schneideinrichtung ortsfest angeordnet ist und die Zwangsführung für die Behälter ein Annährungsorgan für die Behälter an die Schneideinrichtung aufweist,
**dadurch gekennzeichnet,**
**dass** das Annährungsorgan als Zellenrad ausgebildet ist und oberhalb einer Auflagefläche für die Behälter angeordnet ist,
wobei das Zellenrad zumindest abschnittsweise von einem Rahmenbauteil eingefasst ist, und
**dass** die Schneideinrichtung eine Klinge ist, die am Rahmenbauteil befestigt ist.

2. Vorrichtung nach Anspruch 1, **dadurch gekennzeichnet, dass** das Annährungsorgan jeweils einen Behälter aufnehmende Taschen hat.

3. Vorrichtung nach Anspruch 1 oder 2, **dadurch gekennzeichnet, dass** das Zellenrad (5) entlang der Drehrichtung gerichtete Zellen aufweist, wobei jeweils zwischen zwei einander benachbarten Zähnen (6) eine Tasche für einen Behälter ausgebildet ist.

4. Vorrichtung nach einem der Ansprüche 1 bis 3, **dadurch gekennzeichnet, dass** die Zähne (6) jeweils eine parallel zur Auflagefläche für die Behälter ausgerichtete Schlitzung (9) aufweisen.

5. Vorrichtung nach einem der vorhergehenden Ansprüche, **dadurch gekennzeichnet, dass** sie ein Maschinengestell (1) für ihre Bauteile hat.

6. Verfahren zum Recyceln von mit pulvrigem Inhalt gefüllten und geschlossenen Behältern, insbesondere von Kaffeekapseln (3, 3'), insbesondere unter Einsatz einer Vorrichtung nach den Ansprüchen 1 bis 5, **dadurch gekennzeichnet,**
**dass** zunächst die Behälter gleich ausgerichtet und jeweils voneinander vereinzelt werden, dass die Behälterwandungen mit einer Schneideinrichtung in schneidende Wirkverbindung gebracht werden und dass anschließend der Inhalt der Behälter von den Behälterresten getrennt wird.

7. Verfahren nach einem der Ansprüche 1 bis 6, **dadurch gekennzeichnet, dass** die Behälter mit einem Zellenrad vereinzelt werden.

8. Verfahren nach einem der Ansprüche 1 bis 7, **dadurch gekennzeichnet, dass** die Behälter auf einer Auflagefläche aufliegend der Schneideinrichtung zugeführt werden.
